# EUROPÄISCHE PATENTANMELDUNG

(11) **EP 4 145 366 A1**
(43) Veröffentlichungstag der Anmeldung: **08.03.2023**
(21) Anmeldenummer: 22193391.4
(22) Anmeldetag: 01.09.2022
(51) Int. Cl.: G06Q 10/04, C01B 3/00, C01B 3/34

(54) **VERFAHREN ZUM BETREIBEN EINER WASSERSTOFF-TANKSTELLE, UND WASSERSTOFF-HYBRID-TANKSTELLE**

(30) Priorität: 02.09.2021 DE 102021122808
(71) Anmelder: Hydro-Generation GmbH, 48432 Rheine (DE)
(72) Erfinder: Niehoff, Sebastian, 48432 Rheine (DE); Duque, Diana, 48147 Münster (DE)
(74) Vertreter: Habbel, Ludwig

(57) **Zusammenfassung**

Bei einer Wasserstoff-Tankstelle (1) schlägt die Erfindung vor, Wasserstoff lokal im Bereich der Tankstelle (1) wahlweise mittels eines Elektrolyseurs (6) und / oder eines Reformers (7) zu erzeugen, wobei eine Steuerung (12) in der Art ausgestaltet und dazu bestimmt ist, aufgrund von Preisinformationen der zur Wasserstoffherstellung benötigten Ressourcen wahlweise den Elektrolyseur (6) und / oder den Reformer (7) ein- oder auszuschalten, so dass der Wasserstoff stets möglichst kostengünstig erzeugt wird.

## Beschreibung

Die Erfindung betrifft ein Verfahren zum Betreiben einer Wasserstoff-Tankstelle nach dem Oberbegriff des Anspruchs 1.

Ein gattungsgemäßes Verfahren zum Betreiben einer Wasserstoff-Tankstelle ist aus der Praxis bekannt. Dabei wird der Wasserstoff im Bereich der Tankstelle selbst erzeugt, muss also nicht in Gastanks, Gasflaschen oder ähnlichen Transportbehältern vom Erzeugungsort zur Tankstelle transportiert werden, so dass die Bereitstellungskosten für den Wasserstoff an der Tankstelle vorteilhaft niedrig gehalten werden können.

Aus der Praxis ist es weiterhin bekannt, Wasserstoff auf zwei unterschiedliche Arten zu erzeugen: erstens können mittels eines Elektrolyseurs Wasserstoff und Sauerstoff aus Wasser gewonnen werden, und zweitens kann auf dem Wege der sogenannten Dampfreformierung mittels eines Reformers Wasserstoff aus einem kohlenstoffhaltigen Energieträger - z.B. Erdgas - und Wasser gewonnen werden.

Der Erfindung liegt die Aufgabe zugrunde, ein gattungsgemäßes Verfahren dahingehend zu verbessern, dass die Bereitstellungsgebühr für den Wasserstoff an der Tankstelle weiter reduziert werden kann. Weiterhin liegt der Erfindung die Aufgabe zugrunde, eine Wasserstoff-Tankstelle anzugeben, die in der Art möglichst wirtschaftlich betrieben werden kann, dass der zum Tanken angebotene Wasserstoff möglichst preisgünstig bereitgestellt werden kann.

Diese Aufgabe wird durch ein Verfahren nach Anspruch 1 gelöst sowie durch eine Wasserstoff-Tankstelle nach Anspruch 7. Vorteilhafte Ausgestaltungen sind in den Unteransprüchen beschrieben.

Die Erfindung schlägt mit anderen Worten vor, nicht nur eine, sondern die beiden eingangs beschriebenen Produktionsmethoden anzuwenden. Dabei ist eine Steuerung vorgesehen, die automatisch zwischen den beiden Produktionsmethoden umschaltet, und zwar anhand von Preisinformationen, die in einer Datenquelle hinterlegt sind. Die Datenquelle liegt in Form einer Datenbank vor, auf welche ein Rechner zugreift, so dass eine automatische Berechnung von Erzeugungspreisen durchgeführt werden kann, wobei in diese automatische Berechnung die Preisinformationen einfließen. Die Preisinformationen beziehen sich dabei auf die Bezugspreise von den Ressourcen, die für die Herstellung des Wasserstoffs erforderlich sind, beispielsweise das für den Betrieb des Reformers erforderliche Erdgas, für das Wasser und für die elektrische Energie.

Im Rahmen des vorliegenden Vorschlags wird das Gas, welches für den Betrieb des Reformers verwendet wird, als Erdgas bezeichnet, weil es typischerweise von einem Versorger bereitgestellt wird, der ein Gasnetz betreibt. Abweichend von der Bezeichnung als Erdgas muss das verwendete Gas jedoch nicht als Bodenschatz aus der Erde stammen, sondern kann vorzugsweise als regenerativer Energieträger z.B. in Form von Biogas vorliegen. Dabei ist es aus der Praxis bekannt, das zunächst erzeugte Biogas so aufzubereiten, dass es in das öffentliche, häufig als "Erdgasnetz" bezeichnete Gasnetz eingespeist werden kann.

Anhand dieser automatisch berechneten Erzeugungspreise kann durch eine einfache Differenzbildung automatisch berechnet werden, ob die Herstellung des Wasserstoffs mittels des Elektrolyseurs oder mittels des Reformers kostengünstiger ist. Beispielsweise kann stets der berechnete Erzeugungspreis des Elektrolysegases automatisch von dem berechneten Erzeugungspreis des Reformats abgezogen werden, so dass ein sogenannter Entscheidungswert automatisch erhalten wird. Ist dieser Entscheidungwert positiv, also größer als 0, so sind die Kosten für die Herstellung des Reformats höher als die Herstellungskosten für das Elektrolysegas. Unabhängig davon, ob der Rechner in eine Anlagensteuerung integriert ist, welche die Wasserstoff-Produktionsanlage steuert, oder ob er als externe Komponente vorliegt, ist er jedenfalls zur Datenübertragung mit der Anlagensteuerung verbunden. Der Entscheidungswert kann an die Steuerung übermittelt werden, so dass in Abhängigkeit davon, ob der Entscheidungswert positiv oder negativ ist, zur Herstellung des Wasserstoffs das jeweils kostengünstigere Verfahren genutzt werden kann, indem die Steuerung automatisch jeweils den Reformer oder den Elektrolyseur ein- bzw. ausschaltet.

Während das Erdgas und das Wasser in der Regel ausschließlich externe Ressourcen sind, die von Versorgungsunternehmen bereitgestellt werden, kann bei der elektrischen Energie ggf., je nach Ausgestaltung der Tankstelle, unterschieden werden zwischen elektrischer Energie, die als externe Ressource von einem Versorgungsunternehmen bezogen wird, und elektrischer Energie, die als interne Ressource im Bereich der Tankstelle selbst erzeugt wird, z.B. durch Fotovoltaik-Module, ein Wasser- oder Windkraftwerk oder dergleichen. Dementsprechend können in der Datenbank auch Informationen darüber hinterlegt sein, welcher Erzeugungspreis dieser internen Ressource zuzurechnen ist. Wenn diese interne Ressource genutzt werden kann, beispielsweise die Wind- oder Sonnenscheinverhältnisse dies ermöglichen, kann daher der Entscheidungswert nicht nur unter Berücksichtigung der externen, sondern auch der internen Ressourcen berechnet werden.

Vergleichbares gilt für elektrische Energie, die lokal gespeichert wird, beispielsweise wenn bei einem Überangebot an lokal erzeugter elektrischer Energie der Überschuss in einem Akkumulator gespeichert wird, aus dem die elektrische Energie später wieder entnommen werden kann. Auch wenn im Falle volatiler Strompreise elektrische Energie besonders günstig extern bezogen werden kann, kann diese Energie lokal gespeichert werden. Die jeweiligen Mengen und die jeweils zugehörigen externen Bezugspreise bzw. internen Erzeugungskosten der lokal gespeicherten elektrischen Energie können in der Datenbank hinterlegt werden, so dass für die Gesamtmenge der lokal gespeicherten elektrischen Energie der Durchschnittspreis automatisch berechnet werden kann, zu dem diese interne Ressource verbraucht werden kann.

Daraus, dass zwei unterschiedliche Produktionsmethoden verwendet werden, ergibt sich, dass das erzeugte Wasserstoffgas entweder als Elektrolysegas oder als Reformat vorliegen kann oder auch als eine Mischung aus Reformat und Elektrolysegas, wenn nämlich beide Produktionsmethoden gleichzeitig genutzt werden. Die Mischung aus Reformat und Elektrolysegas wird im Rahmen des vorliegenden Vorschlags als "Mischgas" bezeichnet, auch wenn es sich dabei jeweils um Wasserstoffgas handelt. Daher wird die Tankstelle auch als "Hybrid-Wasserstoff-Tankstelle" bezeichnet, da sie den auf zwei unterschiedlichen Wegen erzeugten Wasserstoff bevorratet und vertreibt. Selbst wenn die beiden unterschiedlichen Produktionsmethoden nicht gleichzeitig, sondern in zeitlicher Reihenfolge nacheinander genutzt werden, kann ein Mischgas vorliegen, nämlich wenn das Reformat und das Elektrolysegas gemeinsam gespeichert werden, beispielsweise in einem Zwischenspeicher bei vergleichsweise geringem Druck, bevor der Wasserstoff dann verdichtet und in dem Wasserstoff-Speicher der Tankstelle bei einem vergleichsweise hohen Druck von z.B. 700 bis 800 bar gespeichert wird.

Um den Wasserstoff in den Wasserstoff-Speicher der Tankstelle einspeichern zu können, muss der Wasserstoff bestimmten Qualitätsanforderungen genügen. Sowohl das Elektrolysegas als auch das Reformat müssen daher aufbereitet werden. Dies kann in einer Ausgestaltung des Verfahrens auf unterschiedliche Weise geschehen, da die beiden auf unterschiedliche Weise hergestellten Gase unterschiedliche Zusammensetzungen haben. Die Kosten für die jeweilige Aufbereitung des erzeugten Wasserstoffgases können ebenfalls in der Datenbank als interne Ressource hinterlegt werden, so dass sie in die automatische Berechnung der beiden unterschiedlichen Wasserstoff-Erzeugungspreise einbezogen werden können.

In einer anderen Ausgestaltung des Verfahrens können die beiden auf unterschiedliche Weise hergestellten Gase, also das Elektrolysegas und das Reformat, auf dieselbe Art aufbereitet werden, z. B. mittels Druckwechsel-Adsorption DWA (was auch als PSA = Pressure Swing Adsorption bekannt ist). In diesem Fall ist kein Kostenunterschied bei der Gasaufbereitung zu beachten und für beide Gaserzeugungsverfahren wären die gleichen Kosten zu berücksichtigen. Für die Entscheidung, ob das Wasserstoffgas auf die eine oder auf die andere Weise erzeugt werden soll, können die Aufbereitungskosten in diesem Fall außer Acht gelassen werden und müssen nicht in die Berechnung einfließen, was die automatische Berechnung vereinfacht, z. B. die Berechnung des oben erwähnten Entscheidungwerts.

Die Kosten für Wasser und Gas, beispielsweise für Biogas, sind in der Vergangenheit über vergleichsweise längere Zeiträume konstant geblieben und haben sich dementsprechend nur vergleichsweise langsam oder selten geändert. Die Bezugskosten für elektrische Energie hingegen unterliegen stärkeren und insbesondere kurzfristigeren Änderungen, so dass in einer besonders einfachen Ausgestaltung des erfindungsgemäßen Verfahrens ausschließlich die Information über Stromkosten als externe Ressource in der Datenbank hinterlegt sein kann.

Was beispielsweise die Kosten an elektrischer Energie betrifft, so sind bei beiden Produktionsmethoden bestimmte elektrisch betriebene Komponenten der Wasserstoff-Herstellungsanlage stets gleichermaßen benötigt, z.B. Pumpen, die Steuerung selbst, aber auch elektrisch angesteuerte Ventile oder ein Verdichter, der das Wasserstoffgas komprimiert, bevor es in dem Wasserstoff-Speicher gespeichert wird. Ein erheblicher Unterschied zwischen den beiden Produktionsmethoden besteht im Hinblick auf den Verbrauch an elektrischer Energie jedoch in dem Energiebedarf des Elektrolyseurs, welcher deutlich höher ist als der Energiebedarf zum Betrieb des Reformers. Angesichts stark und in vergleichsweise kurzen Zyklen schwankender Strompreise kann mittels der Steuerung angesichts der unterschiedlichen Erzeugungskosten des Wasserstoffgases beispielsweise in Abhängigkeit von den Strompreisen die jeweils günstige Produktionsmethode angewendet werden. Durch die Ausnutzung von besonders günstigen Stromtarifen kann daher das vorschlagsgemäße Verfahren dazu genutzt werden, Wasserstoffgas zu einem hohen Anteil elektrolytisch zu erzeugen und so die Gasvorräte zu schonen. Insbesondere wenn im Gasnetz der Anteil von regenerativ erzeugtem Gas sinkt und dementsprechend der Anteil von aus Bodenschätzen stammendem Gas steigt, kann durch einen höheren Anteil des elektrolytischen erzeugten Wasserstoffs der Verbrauch an Bodenschätzen reduziert werden.

Der Steuerung werden erstens mittels der Datenbank die entsprechenden Preisinformationen der externen und der Eigen-Ressourcen zur Verfügung gestellt, und zweitens werden der Steuerung Informationen über die Verfügbarkeit der Eigen-Ressourcen bereitgestellt, beispielsweise Informationen über die momentan erzeugte elektrische Energie oder die ggf. in einem elektrischen Speicher gespeicherte, zuvor selbst erzeugte elektrische Energie. Dadurch, dass die in der Datenbank hinterlegten Preisinformationen in Intervallen aktualisiert werden, berücksichtigt die Steuerung automatisch sich ändernde Verhältnisse in den externen und ggf. auch in den eigenen Kosten, sowie über die Verfügbarkeit der Eigen-Ressourcen. Anhand dieser Informationen und anhand von Informationen darüber, wie stark die jeweiligen Kosten die eine oder die andere Wasserstoff-Produktionsmethode beeinflussen, wird mittels der Steuerung automatisch bestimmt, welche Produktionsmethode momentan genutzt oder abgeschaltet wird, so dass stets automatisch die kostengünstigere der beiden Produktionsmethoden angewendet werden kann und der Wasserstoff an der Tankstelle dementsprechend zu möglichst günstigen Erzeugungspreisen bereitgestellt werden kann.

In der Tankstelle befindet sich ein Wasserstoff-Speicher, so dass Wasserstoff auf Vorrat erzeugt und in diesem Wasserstoff-Speicher gespeichert werden kann. Aus dem Wasserstoff-Speicher wird dann die jeweils benötigte Menge an Wasserstoff entnommen, um den Tank eines Fahrzeugs zu befüllen. Je nachdem, wie die Nachfragesituation ist, also die Anzahl von Fahrzeugen, die innerhalb einer bestimmten Zeit aufgetankt werden sollen, und wie der Füllstand des Wasserstoff-Speichers der Tankstelle ist, und wie die Produktionsgeschwindigkeit an der Tankstelle ist, also die Menge an Wasserstoff, die in einer bestimmten Zeit hergestellt werden kann, können sich unterschiedliche Ausgestaltungen des Verfahrens ergeben, die von der Steuerung automatisch gewählt werden:
Eine erste Situation beim Betreiben der Wasserstoff-Tankstelle kann darin bestehen, dass bei einem ausreichenden Wasserstoff-Vorrat im Wasserstoff-Speicher eine nur vergleichsweisen geringen Nachfrage nach Wasserstoff herrscht. In dieser ersten Situation kann die Produktion des Wasserstoffs komplett abgeschaltet werden, wenn beispielsweise der Wasserstoff-Speicher keinen zusätzlichen Wasserstoff mehr aufnehmen kann.

Eine zweite Situation kann darin bestehen, dass die Bezugspreise für die Ressourcen hoch sind, gleichzeitig aber die Nachfrage nach Wasserstoff an der Tankstelle nicht hoch ist. Wenn in dieser zweiten Situation zu erwarten ist, dass sich die momentan hohen Bezugspreise demnächst reduzieren werden, kann die Wasserstoffproduktion momentan unterbunden werden, um die Nachfrage nach Wasserstoff aus der in dem Wasserstoff-Speicher vorhandenen Wasserstoffmenge zu bedienen. Beispielsweise kann absehbar sein, dass Preise für externe Ressourcen fallen werden, oder dass in absehbarer Zeit preisgünstig unter Verwendung von Eigen-Ressourcen Wasserstoff produziert werden kann, wie es beispielsweise nachts absehbar ist, dass am kommenden Tag mittels der Fotovoltaik-Anlage elektrische Energie als Eigen-Ressource bereitstehen wird, oder wenn anhand von Wetterdaten absehbar ist, dass bei einer momentanen Flaute demnächst Wind aufkommen wird, so dass mittels einer Windkraftanlage elektrische Energie als Eigen-Ressource bereitgestellt werden können.

Eine dritte Situation kann in Art eines dynamischen Gleichgewichts darin bestehen, dass der Wasserstoff-Speicher der Tankstelle als Pufferspeicher bzw. Zwischenspeicher dient, aus dem heraus eine regelmäßige, aber nicht übermäßig große Nachfrage nach Wasserstoff bedient wird, während gleichzeitig kontinuierlich Wasserstoff produziert wird und in den Tank geleitet wird. In diesem Fall kann von den beiden unterschiedlichen Produktionsmethoden die je nach den herrschenden Randbedingungen kostengünstigste Produktionsmethode angewendet werden.

Eine vierte Situation kann ausgehend von der oben geschilderten dritten Situation eines dynamischen Gleichgewichts darin bestehen, dass durch eine große Nachfrage nach Wasserstoff das Gleichgewicht gestört wird und der im Wasserstoff-Speicher vorhandene Wasserstoffvorrat absinkt. In dieser vierten Situation kann es aus Gründen der Versorgungssicherheit vorteilhaft sein, die beiden Produktionsmethoden gleichzeitig zu nutzen, um die Erzeugung eines ausreichenden Wasserstoff-Nachschubs zu gewährleisten und den Füllstand des Wasserstoff-Speichers der Tankstelle nicht auf praktisch Null absinken zu lassen.

Aus den genannten Situationen heraus wird deutlich, dass in einer vorteilhaften Ausgestaltung des Verfahrens der Steuerung nicht nur Informationen über die Bezugspreise der einzelnen fremden und eigenen Ressourcen in einer Datenbank zur Verfügung gestellt werden, sondern auch Informationen über die Verfügbarkeit der Eigen-Ressourcen, z.B. die momentane Ausbeute einer Photovoltaikanlage oder eines Windkraftwerks, oder die Menge an gespeicherter elektrischer Energie, die als Eigen-Ressource erzeugt worden ist und in einem elektrischen Speicher zum Verbrauch bereitgestellt ist, oder die bereits produzierte und im Wasserstoff-Speicher gespeicherte Menge an Wasserstoff.

Darüber hinaus können zusätzliche Informationen bereitgestellt werden, die externe, außerhalb der Tankstelle liegende Einflüsse berücksichtigen, z.B. die erwähnten Wetterinformationen. Auch Informationen über das zu erwartende Verbraucherverhalten stellen derartige zusätzliche Informationen dar, die z.B. berücksichtigen, dass im Zyklus der Wochentage oder zum Beginn von Schulferienzeiten oder dergleichen unterschiedlich hohe Verkehrsaufkommen und eine damit verbundene unterschiedlich hohe Nachfrage nach Wasserstoff prognostiziert werden kann.

Diese zusätzlichen Informationen können unmittelbar die äußeren Einflüsse beschreiben, beispielsweise Informationen über die zu erwartende Dauer und Geschwindigkeit von Wind oder Sonnenschein oder die Anzahl von Fahrzeugen, die voraussichtlich tanken werden, wobei diese Daten in diesem Zusammenhang als Rohdaten bezeichnet werden. Die Rohdaten werden automatisch verarbeitet zu Informationen die unmittelbar den Betrieb der Tankstelle betreffen, z.B. in Form von zu erwartenden Ressourcen-Zuflüssen und / oder Wasserstoff-Abflüssen. Anhand der örtlichen Gegebenheiten an der Tankstelle, z.B. betreffend die Ausgestaltung und Leistungsfähigkeit der Fotovoltaik- oder Windkraftanlage, kann aus den Rohdaten die zu erwartende Menge elektrischer Energie automatisch berechnet werden, die als Eigen-Ressource bereitgestellt werden kann, oder es kann automatisch die Wasserstoffmenge berechnet werden, die aufgrund der prognostizierten Anzahl der zu betankenden Fahrzeuge von der Tankstelle bereitgestellt werden sollte.

Die Rohdaten, also die Informationen über die äußeren Einflüsse können aus verschiedenen Quellen stammen, zum Beispiel von Wetterdiensten, von Behörden des Straßenverkehrs, Automobilclubs oder dergleichen. Die automatische Verarbeitung der Rohdaten kann beispielsweise in der Tankstelle erfolgen, beispielsweise auf einem Rechner, auf dem auch das Programm der Steuerung läuft.

Alternativ dazu, Rohdaten bereitzustellen, können die zusätzlichen Informationen auch in einer aufbereiteten Form bereitgestellt werden, z.B. wenn an externer Stelle Informationen über die oben genannten örtlichen Gegebenheiten an der Tankstelle hinterlegt sind sowie über deren geographische Lage. Dementsprechend werden bei dieser Alternative nicht Informationen über die äußeren Einflüsse, z.B. über die zu erwartende Dauer und Geschwindigkeit von Wind oder Sonnenschein der Tankstelle bzw. deren Steuerung zur Verfügung gestellt, sondern vielmehr die Informationen, die bereits aus diesen Rohdaten automatisch berechnet worden sind, z.B. Informationen über die zu erwartende Energiemenge, die als Eigen-Ressource erzeugt und bereitgestellt werden kann.

Die beiden unterschiedlichen Produktionsmethoden ergeben unterschiedliche Gasgemische, jeweils mit einem hohen Wasserstoffanteil, aber mit unterschiedlichen Beimischungen. Daher ist vorteilhaft eine Aufbereitung des jeweils erzeugten WasserstoffGasgemisches vorgesehen. Beispielsweise enthält das Reformat, also das aus dem Reformer enthaltene Wasserstoffgasgemisch, Anteile wie Methan, CO oder CO₂, die entfernt oder zumindest reduziert werden müssen, um das Wasserstoffgas verdichten und im Tank der Tankstelle speichern zu können. Aus dem elektrolytisch gewonnenen Wasserstoffgasgemisch müssen Anteile wie Wasserdampf oder auch Stickstoff entfernt oder zumindest reduziert werden. Die Kosten für die jeweilige Aufbereitung des Wasserstoffgasgemisches können für die beiden unterschiedlichen Produktionsmethoden unterschiedlich hoch sein, so dass auch diese Kosten in einer Ausgestaltung des Verfahrens als fest vorgegebene Faktoren in der Steuerung berücksichtigt werden können. In einer anderen Ausgestaltung des Verfahrens sind diese Kosten in einer Datenbank hinterlegt, so dass sie bei Preisschwankungen angepasst werden können, und die Steuerung greift für die automatische Berechnung der kostengünstigsten Produktionsmethode auf diese Datenbankeinträge zu.

Die erwähnte Aufbereitung oder Reinigung des produzierten Wasserstoffgasgemisches kann in einer Ausgestaltung des Herstellungsverfahrens unmittelbar nach Herstellung des jeweiligen Wasserstoffgases erfolgen, bevor das dann gereinigte bzw. aufbereitete Gas in den Tank der Tankstelle eingelagert wird. In diesem Fall weist die Tankstelle zwei unterschiedliche Aufbereitungsanlagen auf, von denen eine zur Aufbereitung des Reformat und die andere zur Aufbereitung des Elektrolyse-Wasserstoffs dient. Alternativ dazu können die beiden unterschiedlich hergestellten Wasserstoffgasarten zunächst zusammengeführt werden - also das "Mischgas" bilden - und in diesem Fall ist nur eine einzige Aufbereitungsanlage vorgesehen, in welcher das Mischgas, dass durchaus wechselnde Zusammensetzungen aufweisen kann, gereinigt bzw. aufbereitet wird.

Ein Ausführungsbeispiel einer vorschlagsgemäß ausgestalteten Tankstelle, an welcher das erfindungsgemäße Verfahren durchgeführt werden kann, wird anhand der rein schematischen Darstellung nachfolgend näher beschrieben.

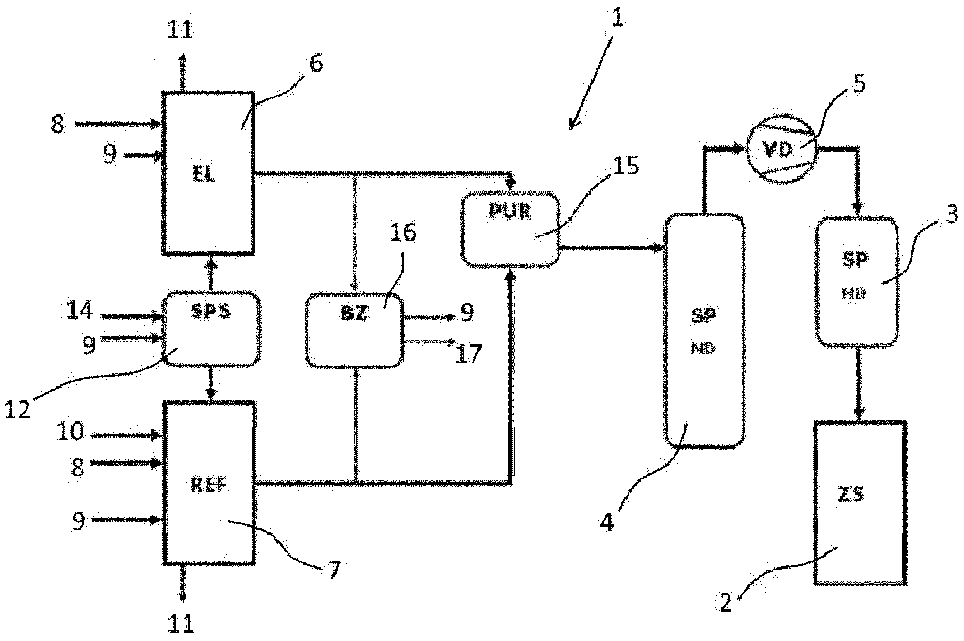

In der Zeichnung ist in Art eines Blockdiagramms eine Tankstelle 1 mit ihren wesentlichen Komponenten dargestellt, wobei einzelne Energie- oder Materialströme durch Pfeile gekennzeichnet sind, so dass diese Pfeile gleichzeitig auch die entsprechenden Leitungen symbolisieren.

An einer Zapfstation 2 wird Wasserstoffgas mit einem Druck zwischen 300 und 700 bar bereitgestellt, so dass an dieser Zapfstation 2 der Tank eines Wasserstoff-Fahrzeugs befüllt werden kann. Der dafür benötigte Wasserstoff wird aus einem Wasserstoff-Speicher 3 entnommen, in welchem der lokal im Bereich der Tankstelle erzeugte Wasserstoff unter dem entsprechenden, vergleichsweise hohen Druck gespeichert wird. Dabei wird der Wasserstoff zunächst in einem sogenannten Niederdruck-Speicher 4 zwischengespeichert, aus dem Niederdruck-Speicher 4 entnommen und mittels eines Verdichters 5 auf den gewünschten höheren Druck gebracht, um in den Wasserstoff-Speicher 3 eingelagert werden zu können.

Um den Wasserstoff in den Niederdruck-Speicher 4 einlagern zu können, wird der Wasserstoff wie folgt erzeugt: die Tankstelle 1 weist einerseits einen Elektrolyseur 6 auf und andererseits einen Reformer 7. Über eine jeweils vorhandene Wasserleitung 8 und eine elektrische Stromleitung 9 werden der Elektrolyseur 6 und der Reformer 7 jeweils mit Wasser und elektrischer Energie als einer externen Ressource versorgt, wobei die elektrische Energie vorzugsweise als regenerative Energie bereitgestellt wird.

Abweichend von dem dargestellten Ausführungsbeispiel, bzw. dieses ergänzend, kann insbesondere vorgesehen sein, dass die Stromleitungen 9 sich jeweils verzweigen und nicht nur an das öffentliche Stromnetz angeschlossen sind, um elektrische Energie als externe Ressourcen bereitstellen, sondern dass sie auch an eine Einrichtung zur lokalen Erzeugung elektrischen Stroms und / oder an einen lokalen elektrischen Energiespeicher angeschlossen sind, so dass elektrische Energie als interne Ressource bereitgestellt werden kann, die im Bereich der Tankstelle 1 erzeugt und / oder gespeichert worden ist.

Der Reformer 7 ist zudem an eine Erdgasleitung 10 angeschlossen, über welche er mit Erdgas versorgt wird, welches vorzugsweise ebenfalls als regenerative Energie, beispielsweise auf der Basis von Biogas, als ebenfalls externe Ressource bereitgestellt wird. Sowohl der Elektrolyseur 6 als auch der Reformer 7 erzeugen jeweils Abgas, welches durch eine jeweils vorgesehene Abgasleitung 11 die dargestellte Wasserstoff-Produktionsanlage verlässt.

Eine elektronische Steuerung 12, die als "Smart Production System" oder kurz SPS bezeichnet wird, ist sowohl mit dem Elektrolyseur 6 als auch dem Reformer 7 steuerungswirksam verbunden, so dass mittels der Steuerung 12 diese beiden Einrichtungen wahlweise ein- oder ausgeschaltet werden können. Die Steuerung 12 wird über eine Stromleitung 9 mit elektrischer Energie versorgt und ist über eine Datenleitung 14 mit einem Intranet oder dem Internet verbunden. Je nach Ausgestaltung der Steuerung 12 kann ein Rechner in der Steuerung 12 verwirklicht sein, oder die Steuerung 12 kann über die Datenleitung 14 auf einen externen Rechner zugreifen, und die Datenleitung 14 kann als Kabel oder kabellos als Funkstrecke verwirklicht sein. Der Rechner wiederum greift auf eine Datenbank zu, in welcher Bezugspreise der externen Ressourcen hinterlegt sind sowie die Erzeugungspreise für interne Ressourcen. Anhand dieser unterschiedlichen Preisinformationen kann mittels der Steuerung 12 der Elektrolyseur 6 und / oder der Reformer 7 wahlweise ein-oder ausgeschaltet werden, so dass der Wasserstoff möglichst wirtschaftlich erzeugt werden kann.

Das aus dem Elektrolyseur 6 stammende Elektrolysegas stellt ebenso wie das aus dem Reformer 7 stammende Reformat ein Wasserstoff-Rohgas dar, welches aufbereitet werden muss, bevor es in den Niederdruck-Speicher 4 eingeleitet werden kann. Für die beiden unterschiedlichen Rohgase können unterschiedliche Aufbereitungsschritte vorgesehen sein. Es kann vorgesehen sein, dem Elektrolyseur 6 und dem Reformer 7 jeweils eine eigene Aufbereitungsanlage nachzuschalten, die speziell auf die Zusammensetzung des jeweiligen Rohgases ausgerichtet ist. Bei dem dargestellten Ausführungsbeispiel hingegen weist die Tankstelle 1 eine Aufbereitungsanlage 15 auf, der die beiden unterschiedlichen Rohgas-Typen zugeführt werden und die mittels Druckwechsel-Adsorption DWA sowohl ein reines Elektrolysegas sowie ein reines Reformat aufbereiten kann als auch ein Mischgas, wenn nämlich der Elektrolyseur 6 und der Reformer 7 gleichzeitig betrieben werden und beide Rohgas-Typen der Aufbereitungsanlage 15 gleichzeitig zugeführt werden. Der aufbereitete Wasserstoff gelangt dann aus der Aufbereitungsanlage 15 in den Niederdruck-Speicher 4.

Bei dem dargestellten Ausführungsbeispiel weist die Tankstelle 1 auch noch eine Brennstoffzelle 16 auf, die wahlweise mit Elektrolysegas oder mit Reformat oder mit einem Mischgas aus diesen beiden Rohgas-Typen betrieben werden kann. Die Brennstoffzelle 16 erzeugt sowohl elektrische Leistung als auch Wärmeleistung. Sie gibt dementsprechend über eine Stromleitung 9 elektrische Energie und über eine Heizungsleitung 17 Wärme ab. Mittels der Steuerung 12 und elektrisch ansteuerbarer Ventile kann beeinflusst werden, ob das jeweilige Wasserstoff-Rohgas in die Brennstoffzelle 16 geleitet wird und / oder in die Aufbereitungsanlage 15.

### Bezugszeichen:

- 1: Tankstelle
- 2: Zapfstation
- 3: Wasserstoff-Speicher
- 4: Niederdruck-Speicher
- 5: Verdichter
- 6: Elektrolyseur
- 7: Reformer
- 8: Wasserleitung
- 9: Stromleitung
- 10: Erdgasleitung
- 11: Abgasleitung
- 12: Steuerung
- 14: Datenleitung
- 15: Aufbereitungsanlage
- 16: Brennstoffzelle

## Patentansprüche

1. Verfahren zum Betreiben einer Wasserstoff-Tankstelle (1), wobei im Bereich der Wasserstoff-Tankstelle (1) Wasserstoff erzeugt, verdichtet, in einem Wasserstoff-Speicher (3) gespeichert und einer Zapfstation (2) der Wasserstoff-Tankstelle (1) bereitgestellt wird,
wobei die Zapfstation (2) bei Bedarf an den Tank eines Verbrauchers angeschlossen wird und der verdichtete Wasserstoff in den Tank des Verbrauchers gefüllt wird,
**dadurch gekennzeichnet,**
**dass** zur Erzeugung von Wasserstoff im Bereich der Wasserstoff-Tankstelle (1) sowohl ein Elektrolyseur (6) bereitgestellt wird als auch ein Reformer (7),
und **dass** eine Datenbank bereitgestellt wird,
und in der Datenbank Informationen über Bezugspreise von extern bereitgestellten Ressourcen in Form von wenigstens elektrischer Energie hinterlegt werden und / oder von Erdgas und / oder von Wasser,
wobei die Informationen in Intervallen aktualisiert werden, und dass ein Rechner bereitgestellt wird, der auf die Datenbank zugreift und automatisch die Erzeugungspreise unter Berücksichtigung der Bezugspreise der externen Ressourcen berechnet,
und **dass** eine Steuerung (12) bereitgestellt wird, die in Abhängigkeit von den aktuellen, berechneten Erzeugungspreisen automatisch den Elektrolyseur (6) oder den Reformer (7) wahlweise ein- oder ausschaltet, in der Art, dass die Erzeugung von Wasserstoff möglichst kostengünstig erfolgt.

2. Verfahren nach Anspruch 1,
**dadurch gekennzeichnet,**
**dass** der verdichtete Wasserstoff gespeichert wird,
und Informationen über den Füllstand des Wasserstoff-Speichers (3) als eine interne Ressource bereitgestellt werden,
und **dass** die Steuerung (12) anhand der aktuellen Bezugspreise und des Füllstandes des Wasserstoff-Speichers (3) automatisch den Elektrolyseur (6) und / oder den Reformer (7) abschaltet.

3. Verfahren nach Anspruch 1 oder 2,
**dadurch gekennzeichnet,**
**dass** elektrische Energie als eine interne Ressource lokal erzeugt wird,
in der Datenbank Informationen über den Erzeugungspreis der lokal erzeugten elektrischen Energie hinterlegt werden, und dass bei der automatischen Berechnung auch der Erzeugungspreis dieser internen Ressource berücksichtigt wird.

4. Verfahren nach Anspruch einem der vorhergehenden Ansprüche,
**dadurch gekennzeichnet,**
**dass** extern bezogene und / oder lokal erzeugte elektrische Energie in einem elektrischen Energiespeicher als eine interne Ressource lokal gespeichert wird,
und in der Datenbank Informationen über die Menge und die Kosten der gespeicherten elektrischen Energie hinterlegt werden.

5. Verfahren nach Anspruch 1 oder 2,
**dadurch gekennzeichnet,**
**dass** das mittels des Elektrolyseurs (6) als Elektrolysegas und das mittels des Reformers (7) als Reformat erzeugte Wasserstoffgas aufbereitet wird, bevor es in dem Wasserstoff-Speicher (3) gespeichert wird,
und **dass** die Kosten für die unterschiedlichen Aufbereitungen des Elektrolysegases und des Reformats ebenfalls in einer Datenbank als interne Ressourcen abgespeichert und aktualisiert werden,
und **dass** bei der automatischen Berechnung auch die Kosten dieser internen Ressourcen berücksichtigt werden.

6. Verfahren nach einem der vorhergehenden Ansprüche,
**dadurch gekennzeichnet,**
**dass** in der Datenbank Informationen über Erzeugungspreise und die gespeicherten Mengen von internen Ressourcen hinterlegt werden,
und **dass** diese Daten für die automatische Berechnung der Erzeugungspreise berücksichtigt werden.

7. Wasserstoff-Tankstelle (1) zur Durchführung des Verfahrens nach einem der vorhergehenden Ansprüche,
mit einer Anlage, die dazu bestimmt ist, Wasserstoff zu erzeugen,
und mit einem Verdichter (5), der dazu bestimmt ist, den erzeugten Wasserstoff zu verdichten,
und mit einem Wasserstoff-Speicher (3), der dazu bestimmt ist, den verdichteten Wasserstoff zu speichern,
und mit einer Zapfstation (2), die dazu bestimmt ist, den verdichteten Wasserstoff in den Tank eines Verbrauchers zu füllen,
wobei die zur Erzeugung von Wasserstoff bestimmte Anlage
• erstens einen Elektrolyseur (6) aufweist, der dazu bestimmt ist, Wasserstoff elektrolytisch aus Wasser zu erzeugen,
wobei der Elektrolyseur (6) an eine Wasserquelle sowie an eine elektrische Energiequelle angeschlossen ist,
• zweitens einen Reformer (7) aufweist, der dazu bestimmt ist, Wasserstoff aus einem als Erdgas bezeichneten Gasgemisch zu erzeugen,
wobei der Reformer an eine Wasserquelle, eine elektrische Energiequelle sowie an eine Erdgasquelle angeschlossen ist,
• und drittens eine Steuerung (12) aufweist, die dazu bestimmt ist, wahlweise den Elektrolyseur (6) und / oder den Reformer (7) ein- oder auszuschalten,
wobei die Steuerung (12) zur Energieversorgung an eine elektrische Energiequelle angeschlossen ist sowie zur Informationsversorgung an eine Datenquelle, sowie steuerungswirksam mit dem Elektrolyseur (6) und dem Reformer (7) verbunden ist,
und die Datenquelle Preisinformationen von wenigstens dem Bezugspreis der elektrischen Energie enthält und / oder von Erdgas und / oder von Wasser.

8. Wasserstoff-Tankstelle nach Anspruch 7,
**dadurch gekennzeichnet,**
**dass** die Datenquelle als Website im Internet ausgestaltet ist.

9. Wasserstoff-Tankstelle nach Anspruch 7 oder 8,
**dadurch gekennzeichnet,**
**dass** die Datenquelle als lokale Datenbank ausgestaltet ist, die an das Internet angeschlossen und dazu bestimmt ist, in Intervallen mittels aus dem Internet verfügbarer Daten neue Datenbankeinträge zu erzeugen und / oder vorhandene Datenbankeinträge zu überschreiben und zu aktualisieren.

10. Wasserstoff-Tankstelle nach einem der Ansprüche 7 bis 9,
**dadurch gekennzeichnet,**
**dass** zwischen die zur Erzeugung von Wasserstoff bestimmte Anlage und den Wasserstoff-Speicher (3) eine Aufbereitungsanlage (15) geschaltet ist, die dazu bestimmt ist, den erzeugten Wasserstoff aufzubereiten.

11. Wasserstoff-Tankstelle nach Anspruch 10,
**dadurch gekennzeichnet,**
**dass** die Aufbereitungsanlage (15) einen ersten Anlagenteil aufweist, dazu bestimmt ist, ausschließlich Wasserstoff aufzubereiten, der mittels des Elektrolyseurs (6) erzeugt worden ist,
sowie einen zweiten Anlagenteil aufweist, dazu bestimmt ist, ausschließlich Wasserstoff aufzubereiten, der mittels des Reformers (7) erzeugt worden ist.

12. Wasserstoff-Tankstelle nach Anspruch 10,
**dadurch gekennzeichnet,**
**dass** die Aufbereitungsanlage (15) dazu bestimmt ist, ein Gasgemisch aufzubereiten, welches Wasserstoffanteile enthält, die mittels des Elektrolyseurs (6) erzeugt worden sind, sowie Wasserstoffanteile enthält, die mittels des Reformers (7) erzeugt worden sind.

13. Wasserstoff-Tankstelle nach einem der vorhergehenden Ansprüche 7 bis 12,
**dadurch gekennzeichnet,**
**dass** dem Elektrolyseur (6) und / oder dem Reformer (7) eine Brennstoffzelle (16) nachgeschaltet ist, die dazu bestimmt ist, aus dem erzeugten Wasserstoff elektrische Energie und Wärme zu erzeugen.

14. Wasserstoff-Tankstelle nach einem der Ansprüche 10 bis 12 und Anspruch 13,
**dadurch gekennzeichnet,**
**dass** die Brennstoffzelle (16) in der Art parallel zu der Aufbereitungsanlage (15) geschaltet ist, dass der erzeugte Wasserstoff wahlweise zu der Brennstoffzelle (16) und / oder zu der Aufbereitungsanlage (15) führbar ist.

15. Wasserstoff-Tankstelle nach Anspruch 13 oder 14,
**dadurch gekennzeichnet,**
**dass** die Brennstoffzelle (16) an die zur Erzeugung von Wasserstoff bestimmte Anlage in der Art angeschlossen ist, dass wahlweise der mittels des Elektrolyseurs (6) und / oder der mittels des Reformers (7) erzeugte Wasserstoff zu der Brennstoffzelle (16) führbar ist.
